# EUROPÄISCHE PATENTSCHRIFT

(11) **EP 1 798 653 B1**
(45) Veröffentlichungstag und Bekanntmachung des Hinweises auf die Patenterteilung: **03.08.2011**
(21) Anmeldenummer: 05027663.3
(22) Anmeldetag: 16.12.2005
(51) Int. Cl.: G06F 21/22

(54) **Verfahren, Computerprogrammprodukt und Vorrichtung zum Schützen eines einen Funktionsblock aufweisenden Programms**
Method, computer program product and device for protecting a program comprising a function block
Procédé, produit programme d'ordinateur et dispositif destiné à la protection d'un logiciel muni d'un bloc de fonction

(43) Veröffentlichungstag der Anmeldung: 20.06.2007
(73) Patentinhaber: Aladdin Europe GmbH, 82110 Germering (DE)
(72) Erfinder: Michael Zunke, D-85551 Kirchheim (DE)
(74) Vertreter: Geyer, Fehners & Partner

(56) Entgegenhaltungen:
- EP-A- 1 288 768
- US-A1- 2004 193 987
- US-B1- 6 405 316
- US-B1- 6 868 495

## Beschreibung

Die Erfindung betrifft ein Verfahren oder eine Vorrichtung zum Schützen eines einen Funktionsblock aufweisenden Programms vor unberechtigter Ausführung und/oder Analyse.

Bisher bekannte Verfahren und Vorrichtungen verschlüsseln das zu schützende Programm, um so ein geschütztes Programm zu erzeugen. Das geschützte Programm kann nur auf einem Computersystem ausgeführt werden, das ein Schutzmodul aufweist. Das Schutzmodul prüft beim Start und gegebenenfalls auch während der Ausführung des Programms das Vorliegen einer notwendigen Lizenz. Wenn die Lizenz vorliegt, wird das geschützte Programm entschlüsselt und in den Arbeitsspeicher des Computersystems geladen. Wenn keine Lizenz vorliegt, wird keine Entschlüsselung durchgeführt und es kann ein entsprechender Hinweis über das Computersystem ausgegeben werden.

Damit kann verhindert werden, daß eine unberechtigte angefertigte Kopie des geschützten Programms auf anderen Computersystemen ausgeführt wird.

Nachteilig ist hierbei jedoch, daß nach der Lizenzüberprüfung und Entschlüsselung des Programms, das Programm bzw. die entsprechenden Teile des Programms, die im Arbeitsspeicher abgelegt sind, nicht mehr verschlüsselt und somit ungeschützt ist/sind. Damit besteht grundsätzlich die Möglichkeit, daß ein Angreifer anhand des im Arbeitsspeicher vorliegenden Programms bzw. der vorliegenden Programmteile eine Kopie des nichtgeschützten Programms anfertigen, das dann auch auf Computersystemen ohne Schutzmodul ausführbar wäre.

Die US 6,868,495 B1 beschreibt ein computerimplementiertes Verfahren zum Schützen von digitalen Informationen, bei dem ein virtueller Vorrichtungstreiber verschlüsselt vorgesehen wird. Wenn eine entsprechende Berechtigung vorliegt, wird der virtuelle Vorrichtungstreiber entschlüsselt und dient zur Virtualisierung des Zugriffs auf die verschlüsselten digitalen Informationen aus Sicht des Betriebssystems.

Die US 2004/0193987 A1 beschreibt ein Verfahren zum Schützen eines einen Funktionsblock aufweisenden Programms, bei dem ein erster Teil des Programms auf einem Computer auszuführen ist und ein zweiter Teil des Programms auf zumindest einer externen Vorrichtung auszuführen ist, die in Verbindung mit dem Computer steht, wobei der zweite Teil des Programms verschlüsselte zur externen Vorrichtung übertragen, in dieser entschlüsselt und ausgeführt wird.

Ausgehend hiervon ist es Aufgabe der Erfindung, ein Verfahren und eine Vorrichtung zum Schützen eines einen Funktionsblock aufweisenden Programms vor unberechtigter Ausführung und/oder Analyse zur Verfügung zu stellen, mit denen die eingangs genannten Nachteile so gut wie vollständig behoben werden können.

Erfindungsgemäß wird die Aufgabe gelöst durch ein computerimplementiertes Verfahren zum Schützen eines einen Funktionsblock aufweisenden Programms gemäß Anspruch 1.

Da der Zusatzcode im Schritt a) eine Anpassung des bzw. der entschlüsselten Funktionsblöcke an das Computersystem derart bewirkt, daß der bzw. die im Arbeitsspeicher des Computersystems entschlüsselt vorliegenden Funktionsblöcke nur in diesem einen Computersystem lauffähig sind, wird somit eine Anpassung des bzw. der entschlüsselten Funktionsblöcke an die konkrete Laufzeitumgebung im Schritt a) durchgeführt, so daß im Arbeitsspeicher stets nur der bzw. die angepaßten, entschlüsselten Funktionsblöcke vorliegen (also auch zu der Zeit, zu der sie in den Arbeitsspeicher geladen sind aber noch nicht ausgeführt werden) und für einen Angreifer eine Kopie des bzw. der entschlüsselten Funktionsblöcke, sofern er eine solche Kopie überhaupt anfertigen kann, nutzlos ist. Der bzw. die kopierten entschlüsselten Funktionsblöcke sind im Schritt a) dynamisch an die vorliegende Laufzeitumgebung angepaßt worden, so daß sie in anderen Laufzeitumgebungen bzw. anderen Computersystemen nicht ausführbar sind. Die Anpassung wird bevorzugt zumindest teilweise im Schutzmodul durchgeführt.

Mit dem erfindungsgemäßen Verfahren wird in vorteilhafterweise ein geschütztes Programm erzeugt, bei dem bei seiner Ausführung der entschlüsselte Funktionsblock temporär nur dann vorliegt, wenn der entschlüsselte Funktionsblock ausgeführt wird. Vor und nach seiner Ausführung ist der verschlüsselte Funktionsblock nicht im Arbeitsspeicher vorhanden. Er wird also nur für die Zeitdauer, während er tatsächlich auszuführen ist, in den Arbeitsspeicher geladen, und danach wieder aus dem Arbeitsspeicher entfernt.

Damit wird eine Analyse und/oder ein Kopieren des geschützten Programms anhand des im Arbeitsspeicher vorliegenden Programms effektiv verhindert, da der entschlüsselte Funktionsblock nur temporär im Arbeitsspeicher vorliegt und es für einen Angreifer nicht ersichtlich ist, zu welchem Zeitpunkt dies der Fall ist. Durch Verhindern der Analyse kann ein unerwünschtes Reverse-Engineering effektiv unterdrückt werden.

Insbesondere können in einer Weiterbildung mehrere Funktionsblöcke verschlüsselt werden. Diese Funktionsblöcke können insbesondere an verschiedenen Stellen im Programmablauf liegen, so daß während der Ausführung des geschützten Programms im Computersystem zumindest zwei der verschlüsselten Funktionsblöcke nie gleichzeitig entschlüsselt im Arbeitsspeicher vorliegen. Damit kann ein Angreifer nie das gesamte (ungeschützte) Programm im Arbeitsspeicher sehen und somit auch keine Kopie des ungeschützten Programms anfertigen bzw. keine Analyse des ungeschützten Programms durchführen.

Bei dem zu schützenden Programm handelt es sich in der Regel um ein ausführbares Programm. Der Funktionsblock bzw. die Funktionsblöcke umfassen insbesondere jeweils eine Anweisungsabfolge, die bei Ausführung eine gewünschte Funktion verwirklicht. Dabei kann es sich um eine programminterne Funktion (beispielsweise in Art eines Unterprogramms) oder um eine unmittelbar nach außen wirkende Funktion (beispielsweise die Erzeugung einer entsprechenden Nachricht auf dem Bildschirm des Computersystems) handeln.

Nachdem zumindest der mittels dem erfindungsgemäßen Verfahren verschlüsselte Funktionsblock für einen Angreifer praktisch nicht aus dem Arbeitsspeicher zu kopieren ist, fehlt dem Angreifer bei seiner Kopie zumindest der verschlüsselte Funktionsblock, so daß er keine komplette Kopie und/oder Analyse des Programms anfertigen kann.

Der Zusatzcode, der zum Programm hinzugefügt wird, kann bei Ausführung im Computersystem die Entschlüsselung des Funktionsblocks derart bewirken, daß der komplette Funktionsblock entschlüsselt im Arbeitsspeicher des Computers vorliegt oder daß immer nur der gerade benötigte Teil des Funktionsblocks entschlüsselt im Arbeitsspeicher des Computers vorliegt. Wenn immer nur ein Teil des Funktionsblocks entschlüsselt im Arbeitsspeicher vorliegt, wird es einem Angreifer noch weiter erschwert, eine Kopie des entschlüsselten Funktionsblocks anhand des Vorliegen des entschlüsselten Funktionsblock im Arbeitsspeicher anzufertigen.

Natürlich kann der Zusatzcode auch weitere Funktionen verwirklichen. So kann z.B. eine herkömmliche Lizenzüberprüfung implementiert werden, die das Vorliegen der Lizenz vor dem Start der Ausführung des geschützten Programms überprüft und die Ausführung des geschützten Programms nur dann zuläßt, wenn die Lizenz vorhanden ist.

Ferner ist es möglich, mittels dem Zusatzcode und dem Schutzmodul eine Lizenzierung auf der Ebene der Funktionsblöcke zu realisieren. Wenn mehrere Funktionsblöcke mit dem erfindungsgemäßen Verfahren verschlüsselt werden, kann z. B. die benötigte Lizenz die individuelle Lizenzierung einzelner Funktionsblöcke umfassen.

Bei dem Schutzmodul kann es sich um ein Hardware-Modul handeln, das beispielsweise über eine normierte Schnittstelle (z.B. USB-Schnittstelle) verbunden werden kann. Natürlich kann das Schutzmodul auch durch eine entsprechende geschützte Software realisiert werden. Insbesondere kann das Schutzmodul eine Kombination aus Hardware und Software sein.

Bei dem computerimplementierten Verfahren wird insbesondere Zusatzcode hinzugefügt, der ein Entfernen des entschlüsselten Funktionsblocks aus dem Arbeitsspeicher im Schritt c) dadurch bewirkt, daß der entsprechende Bereich im Arbeitsspeicher wieder freigegeben wird und/oder tatsächlich physikalisch gelöscht wird. Das physikalische Löschen kann durch Überschreiben des entsprechenden Bereiches im Arbeitsspeicher mit Zufallszahlen oder vorbestimmten Werten erfolgen.

Bei dem computerimplementierten Verfahren kann der zu verschlüsselnde Funktionsblock automatisch ermittelt werden. Dies kann beispielsweise dadurch erfolgen, daß das zu schützende Programm analysiert wird und die Anweisungsabfolge zwischen zwei vorbestimmten Anweisungen bzw. zwischen zwei Einsprungspunkten als Funktionsblock erfaßt wird. Es können aber auch beispielsweise Zusatzinformationen ausgewertet werden, die beim Compilieren des Programms erzeugt werden (z.B. Mapfile, Debug-Informationen).

Beim Verschlüsseln des Funktionsblocks kann man einerseits den Funktionsblock aus dem Programm rausschneiden, so daß das Programm (ohne Zusatzcode und verschlüsselten Funktionsblock) kleiner wird. Alternativ ist es möglich, den entsprechenden Abschnitt im Programm mit dem Zusatzcode zu füllen und/oder zu überschreiben, so daß die Größe gleich bleibt. Man kann zum Überschreiben Zufallscode verwenden, Nullen oder sogenannten Scheincode, der für einen Angreifer wie Code des Programms aussieht, aber während der Ausführung des Programms tatsächlich nie ausgeführt wird.

Der zu verschlüsselnde Funktionsblock kann einen ersten Anweisungsabschnitt, der bei Ausführung eine vom Computersystem abhängende Information ermitteln würde, sowie einen zweiten Anweisungsabschnitt enthalten, der bei weiterer Ausführung die ermittelte Information verwenden würde. In diesem Fall weist das Verfahren in einer Weiterbildung vor dem Verschlüsseln einen Schritt auf, in dem Hilfscode zum Funktionsblock hinzugefügt wird, der den ersten Anweisungsabschnitt ersetzt, wobei im Schritt a) der Hilfscode ausgeführt wird und bewirkt, daß im entschlüsselt im Arbeitsspeicher vorliegenden Funktionsblock die für den zweiten Anweisungsabschnitt benötigte Information bereits eingetragen ist.

Die benötigte Information wird bevorzugt schon vor den Schritten a)-c) z.B. mittels dem Zusatzcode ermittelt, so daß eine größere räumliche und zeitliche Trennung zwischen Ermittlung und Verwendung der Information im Vergleich zum ursprünglichen, zu verschlüsselnden Funktionsblock vorliegt.

Die Ausführung des ersten Anweisungsabschnittes hat, nachdem eine vom Computersystem abhängende Information ermittelt wird, eine für einen Angreifer sichtbare Außenwirkung. Wenn nun der Funktionsblock mehrmals während der Ausführung des Programms auszuführen ist, würde auch der erste Anweisungsabschnitt mehrmals ausgeführt werden, so daß für einen Angreifer jedesmal die Außenwirkung erfaßbar wäre. Durch die Ausführung des Hilfscodes wird nun vorteilhaft erreicht, daß die benötigte Information nicht jedesmal neu besorgt werden muß. Sie kann einmal während der Programmausführung ermittelt werden und muß dann bei jeder Entschlüsselung des Funktionsblocks nur noch eingetragen werden. Somit tritt die Außenwirkung für den Angreifer an einer anderen Stelle während der Programmausführung auf und kann auch weniger oft auftreten.

Insbesondere kann der Zusatzcode bei seiner Ausführung die vom Computersystem abhängende Information ermitteln. Sofern es sich um eine Information handelt, die sich während der Ausführung des Programms nicht ändert, sondern höchstens von Ausführung zu Ausführung des kompletten Programms, genügt es, wenn der Zusatzcode die Information nur einmal ermittelt. Bei der Information kann es sich z.B. um die Betriebssystemversion des Computersystems, die Identifikationsnummer des aktuellen Prozesses und die Identifikationsnummer des aktuellen Threads handeln.

Der Zusatzcode kann bei seiner Ausführung im Schritt a) bewirken, daß dem entschlüsselten Funktionsblock vom Computersystem ein freier Bereich des Arbeitsspeichers zugewiesen wird. Damit legt beispielsweise das Betriebssystem (zufällig) fest, wo der entschlüsselte Funktionsblock im Arbeitsspeicher liegt. Dies erschwert den Angriff, da für einen Angreifer nicht vorherzusehen ist, wo der nur temporär vorliegende Funktionsblock im Arbeitsspeicher abgelegt sein wird.

Insbesondere kann der Zusatzcode bei seiner Ausführung bewirken, daß ein Bereich des Arbeitsspeichers reserviert wird, wobei der reservierte Bereich größer ist als der vom entschlüsselten Funktionsblock benötigte Speicherbereich und wobei der Zusatzcode für den Schritt a) festlegt, in welchem Abschnitt des reservierten Bereichs der entschlüsselte Funktionsblock abzulegen ist, und bevorzugt noch die nötigen Anpassungen (insbesondere Adreßanpassungen) im Funktionsblock und/oder im restlichen Programm bewirkt. Die Anpassung wird bevorzugt zumindest teilweise im Schutzmodul durchgeführt. Hierdurch ist für einen Angreifer nicht vorhersehbar, wo im Arbeitsspeicher der dynamisch erzeugte entschlüsselte Funktionsblock liegen wird.

Ferner kann der Zusatzcode bei seiner Ausführung bewirken, daß mehrere Bereiche des Arbeitsspeichers reserviert werden, die jeweils mindestens so groß sind wie der vom entschlüsselten Funktionsblock benötigte Speicherbereich, wobei der Zusatzcode für den Schritt a) festlegt, in welchem der reservierten Bereiche der entschlüsselte Funktionsblock abgelegt wird, und bevorzugt noch die nötigen Anpassungen (insbesondere Adreßanpassungen) im Funktionsblock und/oder im restlichen Programm bewirkt. Die Anpassung wird bevorzugt zumindest teilweise im Schutzmodul durchgeführt. Hiermit wird wiederum vorteilhaft erreicht, daß es nicht vorhersehbar ist, wo der nur temporär erzeugte entschlüsselte Funktionsblock im Arbeitsspeicher liegen wird.

Der Zusatzcode kann bei seiner Ausführung den Abschnitt bzw. den Bereich in Abhängigkeit der Hardware und/oder Software des Computersystems festlegen. Damit kann beispielsweise erreicht werden, daß der entschlüsselte Funktionsblock in Abhängigkeit von dem tatsächlichen Computersystem, auf dem ausgeführt wird, an eine vorbestimmte Stelle im Arbeitsspeicher abgelegt wird. Damit wird ein Angriff weiter erschwert, da der Speicherbereich für den entschlüsselten Funktionsblock nicht allgemeingültig festgelegt ist und eine Kopie des entschlüsselten Funktionsblocks in anderen Computersystemen nicht lauffähig ist, da die bevorzugt durchgeführte Adreßanpassung für das vorliegende Computersystem zu einem Funktionsblock führt, der in einem anderen Computersystem so nicht ausführbar ist. Es wären weitere Anpassungen notwendig, die jedoch für den Angreifer aus dem kopierten Funktionsblock nicht ersichtlich sind.

Der Zusatzcode und gegebenenfalls der Hilfscode können zumindest teilweise im Schutzsystem ausgeführt werden. Dies erhöht weiter die Sicherheit vor der Anfertigung einer ungeschützten Kopie des geschützten Programms.

Die beschriebenen Weiterbildungen können natürlich auch für den Fall angewendet werden, wenn mehrere Funktionsblöcke verschlüsselt werden.

Ferner wird ein Computerprogrammprodukt zur Verfügung gestellt, das Softwarecode umfaßt, um die Schritte eines der obigen Verfahrensansprüche durchzuführen, wenn das Produkt auf einem Computer ausgeführt wird.

Die Aufgabe wird ferner gelöst durch eine Vorrichtung zum Schützen eines einen Funktionsblock aufweisenden Programms vor unberechtigter Ausführung gemäß Anspruch 10.

Die Schutzeinrichtung kann so weitergebildet werden, daß die Weiterbildungen des Verfahrens zum Schützen eines einen Funktionsblock aufweisenden Programms verwirklicht werden können.

Die Erfindung wird nachfolgend unter Bezugnahme auf die Zeichnung beispielhalber noch näher erläutert. Es zeigen:
- Fig. 1: schematisch eine Ausführungsform der Vorrichtung zum Schützen eines einen Funktionsblock aufweisenden Programms;
- Fig. 2: schematisch ein Computersystem, auf dem das geschützte Programm ausführbar ist;
- Fig. 3a - e: schematisch den Arbeitsspeicher des Computersystems von Fig. 2 sowie die im Arbeitsspeicher geladenen Teile des Programms;
- Fig. 4: schematisch eine weitere Ausführungsform der Vorrichtung zum Schützen eines einen Funktionsblock aufweisenden Programms,
- Fig. 5a und 5b: schematisch den Arbeitsspeicher sowie den geladenen Funktionsblock 3 des ungeschützten Programms 1, und
- Fig. 6: den Arbeitsspeicher 12 mit dem temporär geladenen entschlüsselten Funktionsblock 3'.

Nachfolgend wir eine erste Ausführungsform des erfindungsgemäßen, computerimplementierten Verfahrens zum Schützen eines einen Funktionsblock aufweisenden Programms vor unberechtigter Ausführung beschrieben.

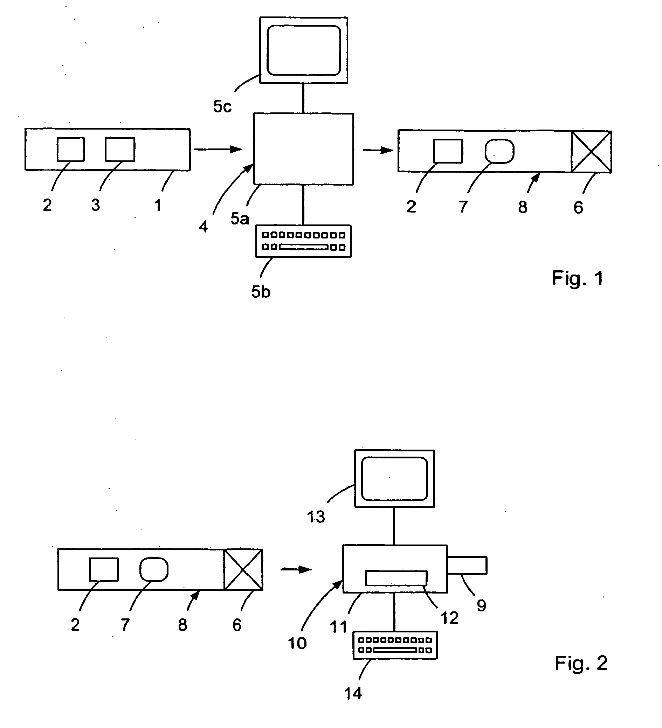

Das zu schützende Programm 1 weist mehrere Funktionsblöcke auf, von denen zur Vereinfachung der Darstellung in Fig. 1 lediglich zwei Funktionsblöcke 2, 3 schematisch dargestellt sind. Unter Funktionsblock wird hier insbesondere eine Anweisungsabfolge verstanden, die bei Ausführung eine gewünschte Funktion verwirklicht, wobei es sich um eine programminterne oder eine unmittelbar nach außen wirkende Funktion handeln kann.

Das zu schützende Programm 1 wird einem Computer 4 zugeführt, der ein Rechenmodul 5a (mit z.B. Prozessor, Festplatte, weiteren Hardware-Elementen sowie einem Betriebssystem), eine Eingabeeinheit 5b (hier beispielsweise eine Tastatur) sowie eine Ausgabeeinheit 5c (z.B. Bildschirm) umfaßt.

Der Computer 4 ermittelt automatisch den Funktionsblock 3, verschlüsselt den Funktionsblock 3 und fügt ihn in verschlüsselter Form 6 zum Programm 1 hinzu. Ferner wird der ursprüngliche Funktionsblock 3 durch Zusatzcode 7 ersetzt, so daß dann ein geschütztes Programm 8 vorliegt. In der schematischen Darstellung in Fig. 1 ist der Zusatzcode 7 durch ein Viereck mit abgerundeten Ecken dargestellt. Der verschlüsselte Funktionsblock 6 ist als Viereck mit eingezeichneten Diagonalen dargestellt.

Das geschützte Programm 8 kann nur auf Computersystemen ausgeführt werden, wenn eine vorbestimmte Lizenz vorliegt. Das Vorliegen der Lizenz kann bei einem solchen, in Fig. 2 gezeigten Computersystem 10 z.B. mittels einem Schutzmodul 9 überprüft werden, das Teil des gezeigten Computersystems 10 bzw. mit dem Computersystem 10 verbunden ist. Das Computersystem 10 umfaßt ferner eine Recheneinheit 11 (mit Prozessor, Arbeitsspeicher 12, und sonstigen Hardwareelementen einschließlich einem Betriebssystem), eine Ausgabeeinheit 13 in Form eines Bildschirms sowie eine Tastatur 14 als Eingabeeinheit. Das Computersystem 10 ist bevorzugt ein anderes System als der Computer 4, mit dem aus dem zu schützenden Programm 1 das geschützte Programm 8 erzeugt wird.

Wenn das geschützte Programm 8 auf dem Computersystem 10 ausgeführt werden soll, führt das Schutzmodul 9 eine Lizenzüberprüfung durch. Nur bei Vorliegen der Lizenz läßt das Schutzmodul 9 die Ausführung des geschützten Programms 8 zu. Dies kann beispielsweise dadurch realisiert werden, daß der verschlüsselte Funktionsblock 6 nur bei Vorliegen der Lizenz entschlüsselt wird. Alternativ oder zusätzlich kann zu jedem anderen Zeitpunkt in bekannter Art und Weise einer Lizenzüberprüfung mittels dem Schutzmodul 9 durchgeführt werden.

Bei Ausführung des geschützten Programms 8 im Computersystem 10 bewirkt der Zusatzcode 7 in Verbindung mit dem Schutzmodul 9, daß der verschlüsselte Funktionsblock 6 nur dann entschlüsselt und in den Arbeitsspeicher 12 des Computersystems 10 geladen wird, wenn bei Ausführung des geschützten Programms 8 der Funktionsblock 3 benötigt wird, der im geschützten Programm 8 nur in verschlüsselter Form vorliegt. Ferner bewirkt der Zusatzcode 7, daß nach Ausführung des entschlüsselten Funktionsblocks dieser wieder aus dem Arbeitsspeicher 12 gelöscht wird. Damit wir vorteilhaft erreicht, daß der entschlüsselte Funktionsblock nur temporär im Arbeitsspeicher 12 vorliegt, und zwar nur dann, wenn er auch tatsächlich benötigt wird. Damit wird es Angreifern erschwert, den Schutz des geschützten Programms 8 dadurch zu umgehen, daß eine Kopie des Programms zum Zeitpunkt der Ausführung erzeugt wird, die dann möglicherweise nicht mehr geschützt ist.

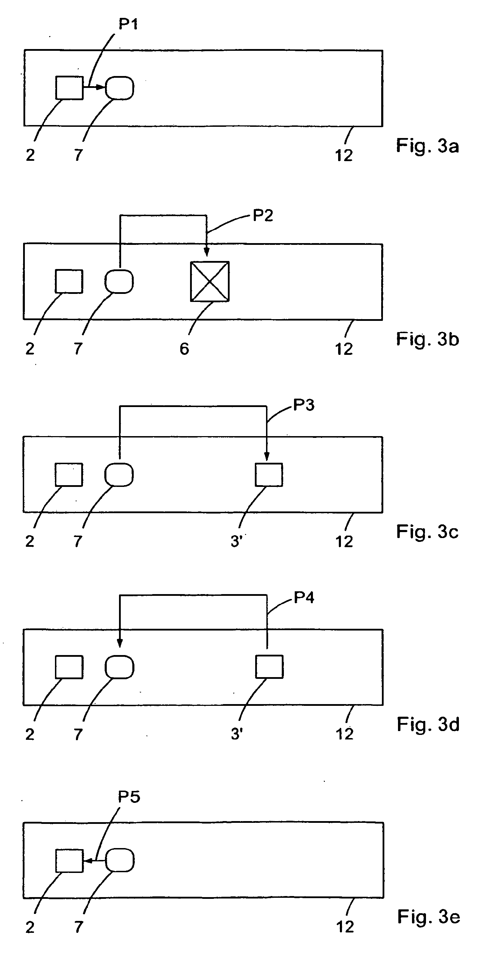

Der genaue Ablauf der Ausführung des geschützten Programms 8 wird nachfolgend in Verbindung mit Fig. 3a - e beschrieben, in denen jeweils schematisch der Arbeitsspeicher 12 und die im Arbeitsspeicher geladenen Teile des Programms 8 dargestellt sind. In Fig. 3a ist der Arbeitsspeicher schematisch zu einem Zeitpunkt dargestellt, zu dem das Programm 8 im Computersystem 10 ausgeführt wird und im Arbeitsspeicher 12 der Funktionsblock 2 sowie der Zusatzcode 7 geladen sind. Der Funktionsblock 2 ruft den Funktionsblock 3 auf, wie durch den Pfeil P1 angedeutet ist. Da der Funktionsblock 3 durch den Zusatzcode 7 ersetzt ist, werden nun Anweisungen des Zusatzcodes 7 und nicht des Funktionsblocks 3 ausgeführt.

Die Anweisungen des Zusatzcodes 7 bewirken, daß der verschlüsselte Funktionsblock 6 in den Arbeitsspeicher 12 geladen wird. In der hier beschriebenen Ausführungsform wird dies so durchgeführt, daß das Betriebssystem des Computersystems 10 einen freien Bereich des Arbeitsspeichers 12 dazu vorgibt.

Das Laden des verschlüsselten Funktionsblocks 6 in den Arbeitsspeicher 12 ist in Fig. 3b durch den Pfeil P2 angedeutet. Vor dem Durchführen dieses Schrittes wird noch mittels dem Schutzmodul 9 eine Lizenzüberprüfung durchgeführt. Nur bei Vorliegen der Lizenz wird der Schritt in Fig. 3b durchgeführt. Wenn keine Lizenz für das Programm 8 vorliegt, wird die Ausführung des Programms 8 hier unterbrochen und eine entsprechende Meldung über den Bildschirm 13 an den Benutzer ausgegeben.

Wenn jedoch eine Lizenz vorliegt, wie hier angenommen ist, wird der verschlüsselte Funktionsblock 6 in den Arbeitsspeicher 12 geladen und danach wird der verschlüsselte Funktionsblock 6 mittels dem Schutzmodul 9 und dem Zusatzcode 7 entschlüsselt und in entschlüsselter Form in dem Arbeitsspeicher 12 abgelegt, wie in Fig. 3c durch den Pfeil P3 angedeutet ist. Der entschlüsselte Funktionsblock 3' kann dabei an einer anderen Stelle im Arbeitsspeicher 12 abgelegt werden, die wiederum vom Betriebssystem vorgegeben sein kann. Alternativ ist es auch möglich, daß der entschlüsselte Funktionsblock 3' an derselben Stelle wie der verschlüsselte Funktionsblock 6 abgelegt und so der verschlüsselte Funktionsblock 6 überschrieben wird.

Als nächstes werden nun die Anweisungen des entschlüsselten Funktionsblocks 3' ausgeführt, so daß die durch den ursprünglichen Funktionsblock 3 bereitgestellte Funktion realisiert wird. Nach Abschluß der Ausführung des entschlüsselten Funktionsblocks 3' wird zum Zusatzcode 7 zurückgesprungen, wie durch den Pfeil P4 in Fig. 3d angedeutet ist. Der Zusatzcode 7 bewirkt dann, daß der entschlüsselte Funktionsblock 3' aus dem Arbeitsspeicher 12 entfernt wird. Dies kann beispielsweise dadurch realisiert werden, daß der entsprechende Speicherbereich im Arbeitsspeicher 12 freigegeben wird und/oder daß ein physikalisches Löschen erfolgt. Das physikalische Löschen kann dadurch realisiert werden, daß der Bereich des Arbeitsspeichers 12, in dem der entschlüsselte Funktionsblock 3' abgelegt ist, überschrieben wird (beispielsweise mit Zufallszahlen). Danach verzweigt der Zufallscode 7 zum Funktionsblock 2 zurück, wie durch den Pfeil P5 angedeutet ist, so daß die Ausführung des Programms 8 wie ursprünglich vorgesehen fortgesetzt werden kann.

Der Zusatzcode 7 bewirkt somit, daß der normale Programmablauf stattfindet, wobei aber der verschlüsselte Funktionsblock 6 nur während der Zeitdauer temporär entschlüsselt im Arbeitsspeicher 12 vorliegt, zu der er tatsächlich benötigt wird. Unmittelbar nach Beendigung der Ausführung des entschlüsselten Funktionsblocks 3' wird der entschlüsselte Funktionsblock 3' aus dem Arbeitsspeicher 12 entfernt.

Im in Fig. 3c gezeigten Schritt wird der Bereich, in dem der entschlüsselte Funktionsblock 3 gespeichert wird, durch das Betriebssystem vorgegeben. Es ist jedoch auch möglich, daß mittels dem Zusatzcode 7 ein Bereich des Arbeitsspeichers 12 reserviert wird, der größer ist als der vom entschlüsselten Funktionsblock 3' benötigte Speicherbereich. Der Abschnitt des reservierten Bereiches, an dem der entschlüsselte Funktionsblock 3' im Arbeitsspeicher 12 abgelegt wird, wird dann z.B. zufällig festgelegt, so daß der entschlüsselte Funktionsblock 3', wenn er mehrmals während des Programmablaufs aufgerufen wird, an unterschiedlichen Abschnitten abgespeichert wird. Alternativ ist es möglicht, daß der Abschnitt in Abhängigkeit der Hardware und/oder Software des Computersystems 10 festgelegt wird und somit beim mehrmaligen Aufrufen im gleichen Computersystem gleich bleibt.

Ferner ist es auch möglich, daß der Zusatzcode mehrere Bereiche des Arbeitsspeichers 12 reserviert, die jeweils mindestens so groß sind wie der vom entschlüsselten Funktionsblock 3' benötigte Speicherbereich. Beim Schritt in Fig. 3c wird dann festgelegt, in welchem der reservierten Bereiche der entschlüsselte Funktionsblock abgespeichert wird. Dies kann wiederum z.B. zufällig erfolgen oder in Abhängigkeit der Hard- und/Software des Computersystems 10.

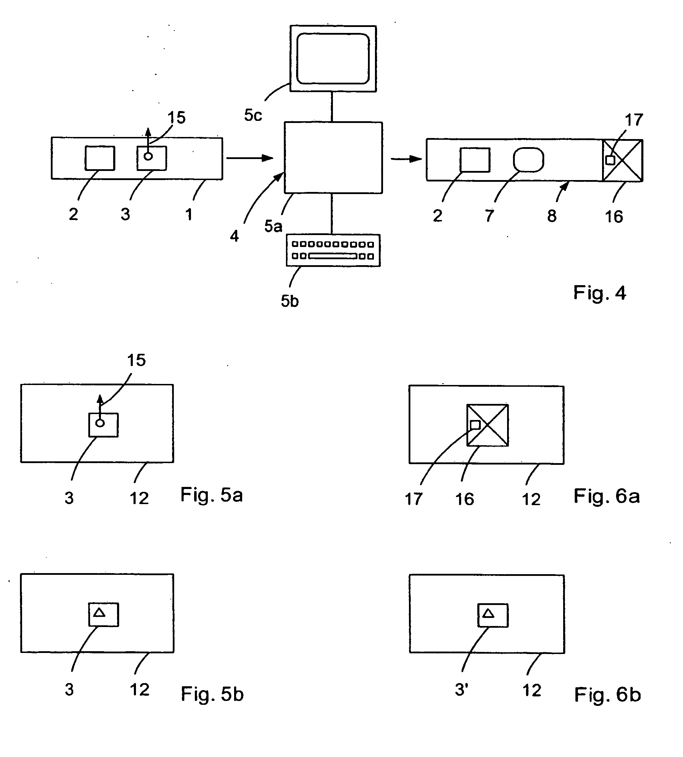

In Fig. 4 ist eine weitere Ausführungsform des erfindungsgemäßen, computerimplementierten Verfahrens zum Schützen eines einen Funktionsblock aufweisenden Programms 1 vor unberechtigter Ausführung schematisch gezeigt. Das zu schützende Programm 1 enthält wiederum Funktionsblöcke 2 und 3, wobei der Funktionsblock 3 einen Anweisungsabschnitt 15 enthält, der, wenn er so im Computersystem 10 ausgeführt wird, eine vom Computersystem 10 abhängende Information ermitteln würde. Dabei handelt es sich insbesondere um eine Information des Computersystems, die sich während der Ausführung des Programms nicht ändert, sich jedoch von Ausführung zu Ausführung oder auch von Computersystem zu Computersystem ändern kann. Beispiele sind die Versionsnummer des auf dem Computersystem eingesetzten Betriebssystems, eine Identifikationsnummer des aktuellen Prozesses, die Identifikationsnummer des aktuellen Threads, usw.

In Fig. 5a und 5b ist gezeigt, wie der Funktionsblock 3 im Arbeitsspeicher 12 abgelegt wird, wenn das ungeschützte Programm 1 auf dem Computersystem 10 ausgeführt werden würde. In diesem Fall würde der Funktionsblock 3 in den Arbeitsspeicher geladen werden (Fig. 5a). Dann würde der Funktionsblock bzw. der erste Anweisungsabschnitt 15 ausgeführt werden, er ermittelt die gewünschte Information und trägt sie in den Funktionsblock 3 ein, wie in Fig. 5b durch das eingezeichnete Dreieck angedeutet ist.

Das zu schützende Programm 1 wird nun in gleicher Weise wie bei dem in Verbindung mit Fig. 1 beschriebenen Verfahren dem Computer 4 zugeführt, der den Funktionsblock 3 ermittelt, verschlüsselt und als verschlüsselter Funktionsblock 16 dem Programm 1 hinzufügt und an der Stelle des bisherigen Funktionsblocks 3 Zusatzcode 7 hinzufügt. Der Funktionsblock 3 wird jedoch nicht nur verschlüsselt, sondern es wird noch vor der Verschlüsselung Hilfscode 17 hinzugefügt, der den ersten Anweisungsabschnitt 15 ersetzt, wie in Fig. 4 schematisch angedeutet ist. Somit liegt wiederum ein geschütztes Programm 8 vor.

Die Ausführung des geschützten Programms 8 läuft im wesentlichen in gleicher Weise ab, wie es in Verbindung mit Fig. 2 und 3 bezüglich der ersten Ausführungsform beschrieben wurde. Lediglich beim Schritt 3c (hin in Fig. 6a dargestellt) wird noch zusätzlich der Hilfscode 17 ausgeführt, der dazu führt, daß die dynamische Information bereits statisch im entschlüsselten Funktionsblock 3' eingetragen ist, bevor der entschlüsselte Funktionsblock 3 ausgeführt wird, wie in Fig. 6b gezeigt ist.

Bei den bisher beschriebenen Ausführungsformen wird der Zusatzcode 7 so in das zu schützende Programm 1 eingefügt, daß er an der Stelle liegt, die der Stelle im Funktionsblock 3 entspricht, die von anderen Funktionsblöcken 2 des zu schützenden Programms aufgerufen werden. Der Zusatzcode 7 wird somit an der aufzurufenden Stelle bzw. dem aufzurufenden Abschnitt des Funktionsblocks 3 eingehängt. Natürlich ist es auch möglich, den Zusatzcode 7 an den Stellen im Programm 1 einzuhängen, die den Funktionsblock 3 aufrufen (also an den aufrufenden Stellen). In diesem Fall wird der Funktionsblock 3 bevorzugt überschrieben oder komplett aus dem zu schützenden Programm 1 entfernt.

Die beschriebenen Ausführungsformen beziehen sich jeweils auf einen einzigen Funktionsblock 3, der verschlüsselt wird. Natürlich können auch mehrere Funktionsblöcke verschlüsselt werden gemäß dem hier beschriebenen Verfahren. In diesem Fall wird die Größe des bzw. der Speicherbereiche immer relativ zum größten Speicherbedarf des bzw. der Funktionsblöcke gewählt, die gleichzeitig auszuführen sind.

## Patentansprüche

1. Computerimplementiertes Verfahren zum Schützen eines einen Funktionsblock (3) aufweisenden Programms (1),
bei dem der Funktionsblock (3) verschlüsselt, Zusatzcode (7) zum Programm hinzugefügt und so ein geschütztes Programm (8) erzeugt wird, das nur bei Vorliegen einer vorbestimmten Lizenz in einem Computersystem (10) ausführbar ist, das einen Arbeitsspeicher (12), in den das geschützte Programm (8) bei Ausführung geladen wird, und ein Schutzmodul (9) zum Schützen vor unberechtigter Ausführung des geschützten Programms (8) aufweist, wobei, wenn bei Ausführung des geschützten Programms (8) der verschlüsselte Funktionsblock (6) auszuführen ist, der Zusatzcode (7) ausgeführt wird und zusammen mit dem Schutzmodul (9) bei Vorliegen der Lizenz
a) eine Entschlüsselung des Funktionsblocks (6) derart bewirkt, daß der Funktionsblock (6) entschlüsselt im Arbeitsspeicher (12) des Computersystems (10) vorliegt,
b) die Ausführung des entschlüsselten Funktionsblocks (3') zuläßt und
c) nach Abschluß der Ausführung des entschlüsselten Funktionsblocks (3') ein Entfernen des entschlüsselten Funktionsblocks (3') aus dem Arbeitsspeicher (12) bewirkt, wobei der Zusatzcode bei seiner Ausführung im Schritt a) eine dynamische Anpassung des entschlüsselten Funktionsblocks (3') an das konkrete Computersystem derart bewirkt, daß der entschlüsselte Funktionsblock (3') nur im Konkreten Computersystem ausführbar ist.

2. Verfahren nach Anspruch 1, wobei der Funktionsblock (3) einen ersten Anweisungsabschnitt (15), der bei Ausführung eine vom Computersystem (10) abhängende Information ermitteln würde, sowie einen zweiten Anweisungsabschnitt enthält, der bei der weiteren Ausführung die ermittelte Information verwenden würde,
wobei das Verfahren vor dem Verschlüsseln einen Schritt aufweist, in dem Hilfscode (17) zum Funktionsblock (3) hinzugefügt wird, der den ersten Anweisungsabschnitt (15) ersetzt,
wobei im Schritt a) der Hilfscode (7) ausgeführt wird und bewirkt, daß im entschlüsselt im Arbeitsspeicher vorliegenden Funktionsblock (3') die für den zweiten Anweisungsabschnitt benötigte Information bereits eingetragen ist.

3. Verfahren nach Anspruch 2, wobei der Zusatzcode (7) bei seiner Ausführung die vom Computersystem (10) abhängende Information ermittelt.

4. Verfahren nach einem der obigen Ansprüche, bei dem der Zusatzcode (7) bei seiner Ausführung im Schritt a) bewirkt, daß dem entschlüsselten Funktionsblock (3') vom Computersystem (10) ein freier Bereich des Arbeitsspeichers (12) zugewiesen wird.

5. Verfahren nach einem der Ansprüche 1 bis 3, bei dem der Zusatzcode (7) bei seiner Ausführung bewirkt, daß ein Bereich des Arbeitsspeichers (12) reserviert wird, wobei der reservierte Bereich größer ist als der vom entschlüsselten Funktionsblock (3') benötigte Speicherbereich,
und wobei der Zusatzcode (7) für den Schritt a) festlegt, in welchem Abschnitt des reservierten Bereichs der entschlüsselte Funktionsblock (3') abzulegen ist.

6. Verfahren nach einem der Ansprüche 1 bis 3, bei dem der Zusatzcode (7) bei seiner Ausführung bewirkt, daß mehrere Bereiche des Arbeitsspeichers (12) reserviert werden, die jeweils mindestens so groß sind wie der vom entschlüsselten Funktionsblock (3') benötigte Speicherbereich, wobei der Zusatzcode (7) für den Schritt a) festlegt, in welchem reservierten Bereich der entschlüsselte Funktionsblock (3') abgelegt wird.

7. Verfahren nach Anspruch 5 oder 6, bei dem der Zusatzcode (17) bei seiner Ausführung den Abschnitt bzw. den Bereich in Abhängigkeit der Hardware und/oder Software des Computersystems (10) festlegt.

8. Verfahren nach einem der obigen Ansprüche, bei dem der Zusatzcode und gegebenenfalls der Hilfscode (17) zumindest teilweise im Schutzsystem (9) ausgeführt wird/werden.

9. Computerprogrammprodukt, das Softwarecode umfaßt, um die Schritte eines der obigen Verfahrensansprüche durchzuführen, wenn das Produkt auf einem Computer ausgeführt wird.

10. Vorrichtung zum Schützen eines einen Funktionsblock aufweisenden Programms (1) vor unberechtigter Ausführung, wobei die Vorrichtung eine Schutzeinrichtung (4) aufweist, die den Funktionsblock (3) verschlüsselt, Zusatzcode (7) zum Programm (1) hinzufügt und so ein geschütztes Programm (8) erzeugt, das nur bei Vorliegen einer vorbestimmten Lizenz in einem Computersystem (10) ausführbar ist, das einen Arbeitsspeicher (12), in den das geschützte Programm (8) bei Ausführung geladen wird, und ein Schutzmodul (9) zum Schutz vor unberechtigter Ausführung des geschützten Programms (8) aufweist,
wobei, wenn bei Ausführung des geschützten Programms (8) in dem Computersystem (10) der verschlüsselte Funktionsblock (6) auszuführen ist, der Zusatzcode (7) ausgeführt wird und zusammen mit dem Schutzmodul (9) bei Vorliegen der Lizenz
a) eine Entschlüsselung des Funktionsblocks (6) derart bewirkt, daß der Funktionsblock (6) entschlüsselt im Arbeitsspeicher (12) des Computersystems (10) vorliegt,
b) die Ausführung des entschlüsselten Funktionsblocks (3') zuläßt und
c) nach Abschluß der Ausführung des entschlüsselten Funktionsblocks (3') ein Entfernen des entschlüsselten Funktionsblocks (3') aus dem Arbeitsspeicher (12) bewirkt, wobei der Zusatzcode bei seiner Ausführung im Schritt a) eine dynamische Anpassung des entschlüsselten Funktionsblocks (3') an das konkrete Computersystem (10) derart bewirkt, daß der entschlüsselte Funktionsblock (3') nur im konkreten Computersystem (10) ausführbar ist.

## Claims

1. A computer-implemented method for protecting a program (1) comprising a functional block (3),
wherein the functional block (3) is encrypted, additional code (7) is added to the program and a protected program (8) is thus generated, which is executable only in the presence of a predetermined license in a computer system (10) which comprises a working memory (12), into which the protected program (8) is loaded during execution, and a protection module (9) for protection against unauthorized execution of the protected program (8), wherein, if the encrypted functional block (6) is to be executed during execution of the protected program (8), the additional code (7) is executed and, if a license is present, said additional code (7), together with the protection module (9),
a) causes decryption of the functional block (6) such that the functional block (8) is present in the working memory (12) of the computer system (10) in decrypted form;
b) allows execution of the decrypted functional block (3'), and
c) upon completion of execution of the decrypted functional block (3'), causes removal of the decrypted functional block (3') from the working memory (12), wherein the additional code, during its execution in step a), causes a dynamic adaptation of the decrypted functional block (3') to the concrete computer system such that the decrypted functional block (3') is executable only in the concrete computer system.

2. The method as claimed in Claim 1, wherein the functional block (3) contains a first instruction segment (15) which, during execution, would determine information that is a function of the computer system (10), as well as a second instruction segment which would use the determined information during further execution,
the method comprising a step prior to encryption, in which step auxiliary code (17) is added to the functional block (3), to replace the first instruction segment (15),
wherein, in step a), the auxiliary code (7) is executed and causes the information needed for the second instruction segment to be already inserted in the functional block (3'), which is present in the working memory in decrypted form.

3. The method as claimed in Claim 2, wherein the additional code (7), during its execution, determines the information that is a function of the computer system (10).

4. The method as claimed in any one of the above claims, wherein the additional code (7), during its execution in step a), causes a free area of the working memory (12) to be allocated to the decrypted functional block (3') by the computer system (10).

5. The method as claimed in any one of Claims 1 to 3, wherein the additional code (7), during its execution, causes an area of the working memory (12) to be reserved, said reserved area being larger than the memory area needed by the decrypted functional block (3'),
and wherein the additional code (7) determines, for the step a), in which segment of the reserved area the decrypted functional block (3') is to be stored.

6. The method as claimed in any one of Claims 1 to 3, wherein the additional code (7), during its execution, causes several areas of the working memory (12) to be reserved, each of these areas respectively being at least as large as the memory area needed by the decrypted functional block (3'), wherein the additional code (7) determines, for the step a), in which reserved area the decrypted functional block (3') will be stored.

7. The method as claimed in Claim 5 or 6, wherein the additional code (17), during its execution, determines said segment or the area, respectively, as a function of the hardware and/or software of the computer system (10).

8. The method as claimed in any one of the above claims, wherein the additional code and, where appropriate, the auxiliary code (17) is/are carried out, at least in part, in the protection system (9).

9. A computer program product, which comprises software code in order to carry out the steps of any one of the above method claims, when the product is being executed on a computer.

10. A device for protecting a program (1), comprising a functional block, against unauthorized execution, said device comprising a protection unit (4) which encrypts the functional block (3), adds additional code (7) to the program (1) and thus generates a protected program (8), which is executable only in the presence of a predetermined license in a computer system (10) comprising a working memory (12), into which the protected program (8) is loaded during execution, and a protection module (9) for protection against unauthorized execution of the protected program (8),
wherein, if the encrypted functional block (6) is to be executed during execution of the protected program (8) in said computer system (10), the additional code (7) is executed and, if a license is present, said additional code (7), together with the protection module (9),
a) causes decryption of the functional block (6) such that the functional block (8) is present in the working memory (12) of the computer system (10) in decrypted form;
b) allows execution of the decrypted functional block (3'), and
c) upon completion of execution of the decrypted functional block (3'), causes removal of the decrypted functional block (3') from the working memory (12), wherein the additional code, during its execution in step a), causes a dynamic adaptation of the decrypted functional block (3') to the concrete computer system such that the decrypted functional block (3') is executable only in the concrete computer system.

## Revendications

1. Procédé implanté dans un ordinateur destiné à protéger un programme (1) présentant un bloc fonctionnel (3),
dans lequel le bloc fonctionnel (3) est codé, le code supplémentaire (7) est ajouté au programme et ainsi un programme (8) protégé est généré, lequel ne peut être exécuté dans un système informatique (10) que si l'on dispose d'une licence prédéfinie, qui présente une mémoire de travail (12), dans lequel le programme (8) protégé est chargé en cas d'exécution, et un module de protection (9) pour la protection d'une exécution non autorisée du programme (8) protégé,
sachant que, lorsque le bloc fonctionnel (6) codé doit être mis en oeuvre en cas d'exécution du programme (8) protégé, le code supplémentaire (7) est exécuté et, en même temps que le module de protection (9) si l'on dispose de la licence,
a) un décodage du bloc fonctionnel (6) est mis en oeuvre de telle sorte que le bloc fonctionnel (6) est présent de façon décodée dans la mémoire de travail (12) du système informatique (10),
b) l'exécution du bloc fonctionnel (3') décodé est autorisé et
c) après la fin de l'exécution du bloc fonctionnel (3') décodé, on procède à un enlèvement du bloc fonctionnel (3') décodé de la mémoire de travail (12), le code supplémentaire entraînant lors de son exécution à l'étape a) une adaptation dynamique du bloc fonctionnel (3') décodé au système informatique concret, de telle sorte que le bloc fonctionnel (3') décodé ne peut être exécuté que dans le système informatique concret.

2. Procédé selon la revendication 1, le bloc fonctionnel (3) contenant une première partie d'instruction (15), qui déterminerait en cas d'exécution une information dépendante du système informatique (10), ainsi qu'une seconde partie d'instruction, qui utiliserait l'information obtenue lors de l'exécution ultérieure,
le procédé présentant avant le codage une étape, au cours de laquelle le code auxiliaire (17) est ajouté au bloc fonctionnel (3), lequel remplace la première partie de directive (15),
le code auxiliaire (7) étant exécuté à l'étape a) et faisant que, lorsque le bloc fonctionnel (3') est présent de façon décodée dans la mémoire de travail, l'information utilisée pour la seconde partie de directive est déjà inscrite.

3. Procédé selon la revendication 2, le code supplémentaire (7) déterminant lors de son exécution l'information dépendant du système informatique (10).

4. Procédé selon l'une quelconque des revendications précédentes, dans lequel le code supplémentaire (7) a pour effet lors de son exécution à l'étape a) qu'une zone libre de la mémoire de travail (12) est attribuée au bloc fonctionnel (3') décodé par le système informatique (10).

5. Procédé selon l'une quelconque des revendications 1 à 3, dans lequel le code supplémentaire (7) a pour effet lors de son exécution qu'une zone de la mémoire de travail (12) est réservée, la zone réservée étant plus grande que la zone de mémoire utilisée par le bloc fonctionnel (3') décodé,
et le code supplémentaire (7) définissant pour l'étape a) dans quelle partie de la zone réservée le bloc fonctionnel (3') décodé doit être déposé.

6. Procédé selon l'une quelconque des revendications 1 à 3, dans lequel le code supplémentaire (7) a pour effet lors de son exécution que plusieurs zones de la mémoire de travail (12) sont réservées, lesquelles sont à chaque fois au moins aussi grandes que la zone de mémoire utilisée par le bloc fonctionnel (3') décodé, le code supplémentaire (7) définissant pour l'étape a) dans quelle zone réservée le bloc fonctionnel (3') décodé est déposé.

7. Procédé selon la revendication 5 ou 6, dans lequel le code supplémentaire (17) définit lors de son exécution la partie ou la zone en fonction du matériel et/ou du logiciel du système informatique (10).

8. Procédé selon l'une quelconque des revendications susmentionnées, dans lequel le code supplémentaire et éventuellement le code auxiliaire (17) est/sont exécuté(s) au moins partiellement dans le système de protection (9).

9. Produit de programme informatique, qui comprend des codes de logiciel pour effectuer les étapes de l'une des revendications de procédé susmentionnées lorsque le produit est exécuté sur un ordinateur.

10. Dispositif destiné à protéger un programme (1) présentant un bloc fonctionnel avant l'exécution non autorisée, le dispositif présentant un dispositif de protection (4), qui code le bloc fonctionnel (3), ajoute le code supplémentaire (7) au programme (1) et génère ainsi un programme (8) protégé, qui ne peut être exécuté dans un système informatique (10) que si l'on dispose d'une licence prédéfinie, qui présente une mémoire de travail (12), dans laquelle le programme (8) protégé est chargé en cas d'exécution, et un module de protection (9) pour la protection de l'exécution non autorisée du programme (8) protégé,
sachant que, lorsque le bloc fonctionnel (6) codé doit être exécuté en cas d'exécution du programme (8) protégé dans le système informatique (10), le code supplémentaire (7) est exécuté et, en même temps que le module de protection (9) en cas d'existence de la licence,
a) entraîne un décodage du bloc fonctionnel (6) de telle sorte que le bloc fonctionnel (6) est présent de façon décodée dans la mémoire de travail (12) du système informatique (10),
b) autorise l'exécution du bloc fonctionnel (3') décodé et,
c) après la fin de l'exécution du bloc fonctionnel (3') décodé, entraîne un enlèvement du bloc fonctionnel (3') décodé de la mémoire de travail (12), le code supplémentaire entraînant lors de son exécution à l'étape a) une adaptation dynamique du bloc fonctionnel (3') décodé au système informatique (10) concret, de telle sorte que le bloc fonctionnel (3') décodé ne peut être exécuté que dans le système informatique (10) concret.
